# EUROPÄISCHE PATENTSCHRIFT

(11) **EP 3 431 369 B1**
(45) Veröffentlichungstag und Bekanntmachung des Hinweises auf die Patenterteilung: **23.06.2021**
(21) Anmeldenummer: 18183608.1
(22) Anmeldetag: 16.07.2018
(51) Int. Cl.: B62D 15/02

(54) **VERFAHREN ZUM LÄNGSEINPARKEN EINES KRAFTFAHRZEUGS IN EINE LÄNGSPARKLÜCKE, WOBEI ABSTANDSSCHWELLWERTE VERRINGERT WERDEN, PARKASSISTENZSYSTEM SOWIE KRAFTFAHRZEUG**
METHOD FOR PARKING A MOTOR VEHICLE IN A KERB-SIDE PARKING SPACE WHERE DISTANCE THRESHOLDS ARE REDUCED, PARKING ASSISTANCE SYSTEM AND MOTOR VEHICLE
PROCÉDÉ PERMETTANT UNE MANOEUVRE DE MISE EN STATIONNEMENT EN CRÉNEAU D'UN VÉHICULE AUTOMOBILE DANS UN EMPLACEMENT DE STATIONNEMENT PARALLÈLE, RÉDUCTION DE VALEUR SEUIL DE DISTANCE, SYSTÈME D'AIDE AU STATIONNEMENT AINSI QUE VÉHICULE AUTOMOBILE

(30) Priorität: 19.07.2017 DE 102017116239
(43) Veröffentlichungstag der Anmeldung: 23.01.2019
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)
(74) Vertreter: Pothmann, Karsten

(56) Entgegenhaltungen:
- EP-A1- 3 124 327
- EP-A2- 1 533 181

## Beschreibung

Die vorliegende Erfindung betrifft ein Verfahren zum Längseinparken eines Kraftfahrzeugs bei einem zumindest semi-autonomen Parkvorgang in eine Längsparklücke. Es wird zumindest eine longitudinale und eine laterale Längsparklückenbegrenzung der Längsparklücke mittels einer Erfassungseinrichtung des Kraftfahrzeugs erfasst. Ferner betrifft die Erfindung ein Parkassistenzsystem sowie ein Kraftfahrzeug.

Aus dem Stand der Technik sind bereits Längseinparkassistenten bekannt, welche einem Fahrer beim Einparken eines Kraftfahrzeugs in eine Längsparklücke unterstützen. Insbesondere vermessen diese Längsparklückenassistenten mittels einer Erfassungseinrichtung des Kraftfahrzeugs die Längsparklücke. Dazu werden die longitudinalen sowie die lateralen Ausmaße der Längsparklücke erfasst. Es wird entschieden, ob das Kraftfahrzeug in die erfasste Längsparklücke hineinpasst. Insbesondere werden dazu jeweilige Abstandsschwellwerte für Objekte bestimmt, welche sich in longitudinaler Richtung der Längsparklücke sowie in lateraler Richtung der Längsparklücke befinden. Insbesondere kann vorgesehen sein, sollte die Längsparklücke als zu klein für das Kraftfahrzeug bestimmt werden, die Abstandsschwellwerte entsprechend verringert werden, sodass das Kraftfahrzeug auch in eine kleinere Längsparklücke zumindest semi-autonom einparken kann.

Die EP 2 569 207 B1 offenbart ein Verfahren zum Einparken oder Ausparken eines Kraftfahrzeugs sowie ein entsprechendes Assistenzsystem und Kraftfahrzeug. Von dem Assistenzsystem werden Abmessungen einer Parklücke, in welcher sich das Kraftfahrzeug befindet oder in welche das Kraftahrzeug einparken wird, bestimmt, wobei mit dem Assistenzsystem ein Abstand zwischen dem Kraftfahrzeug und einem Objekt erfasst wird. Von dem Assistenzsystem wird ein Hinweis erzeugt, wenn der Abstand unterhalb eines Schwellwerts liegt. Dabei wird der Schwellenwert abhängig von den Abmessungen des Kraftfahrzeugs und von den Abmessungen der Parklücke bei einem Einparkvorgang oder bei einem Ausparkvorgang des Assistenzsystems eingestellt. Insbesondere werden im vorliegenden Fall die Schwellwerte verringert, sodass das Kraftfahrzeug auch in eine Parklücke mit einer geringeren Abmessung einparken kann.

Die EP 1 533 181 A2 ist als nächstliegender Stand der Technik nach dem Oberbegriff des Anspruchs 1 zu sehen und betrifft eine Vorrichtung zur semiautonomen Unterstützung des Einparkvorgangs bei Fahrzeugen, umfassend eine Einrichtung zur Ermittlung der Größe einer Parklücke, eine Recheneinheit, Mittel zur Erfassung der aktuellen Position des Fahrzeugs sowie einer Kommunikationseinrichtung, mit welcher einem Fahrzeuglenker Informationen und/oder Anweisungen über einen Einparkvorgang mitteilbar sind, wobei die Rechnereinheit anhand der ermittelten Größe der Parklücke eine Einparkbahn vorgibt. Dabei ist die Rechnereinheit dazu ausgelegt, nach dem Einfahren des Fahrzeugs auf der Grundlage einer vorgegebenen Einparkbahn in die Parklücke die Ausrichtung des Fahrzeugs in Bezug auf die Parklücke und den Rangierabstand vor und hinter dem Fahrzeug erneut zu bestimmen und anhand dieser Daten wenigstens eine weitere Einparkbahn neu zu berechnen.

Das nachfolgende Interesse richtet sich insbesondere darauf, dass das Kraftfahrzeug nach dem Einparkvorgang einen vorbestimmten Abstand zur lateralen Längsparklückenbegrenzung nicht über- oder unterschreitet. Da insbesondere die Vermessung der longitudinalen Ausmaße der Längsparklücke beim Vorbeifahren des Kraftfahrzeugs an der Längsparklücke oftmals fehlerhaft ist, ist es vorteilhaft die Vermessung der longitudinalen Ausmaße während des Parkvorgangs nachzukorrigieren, so dass das Kraftfahrzeug in eine gewünschte Endparkposition, insbesondere bezüglich des lateralen Abstands zur lateralen Längsparklückenbegrenzung, bewegt werden kann.

Aufgabe der vorliegenden Erfindung ist es, ein Verfahren, ein Parkassistenzsystem sowie ein Kraftfahrzeug zu schaffen, mittels welchem beziehungsweise mittels welchen ein vorbestimmter lateraler Abstand des Kraftfahrzeugs zu einer lateralen Längsparklückenbegrenzung verbessert eingenommen werden kann.

Diese Aufgabe wird durch ein Verfahren, ein Parkassistenzsystem sowie ein Kraftfahrzeug gemäß den unabhängigen Ansprüchen gelöst.

Ein Aspekt der Erfindung betrifft ein Verfahren zum Längseinparken eines Kraftfahrzeugs beim zumindest semi-autonomen Parkvorgang in eine Längsparklücke. Es wird zumindest eine longitudinale und eine laterale Längsparklückenbegrenzung der Längsparklücke mittels einer Erfassungseinrichtung des Kraftfahrzeugs erfasst.

Es wird eine Soll-Parkposition in der Längsparklücke mit einem longitudinalen Abstand eines Kraftfahrzeugbauteils des Kraftfahrzeugs zu der longitudinalen Längsparklückenbegrenzung und mit einem lateralen Abstand eines Kraftfahrzeugbauteils des Kraftfahrzeugs zu der lateralen Längsparklückenbegrenzung abhängig von den erfassten Längsparklückenbegrenzungen und abhängig von einem longitudinalen Abstandsschwellwert und einem lateralen Abstandsschwellwert bestimmt. Es wird eine Einparktrajektorie für die Soll-Parkposition abhängig von zumindest den Abstandschwellwerten bestimmt. Das Kraftfahrzeug wird entlang der Einparktrajektorie bewegt und während der Bewegung wird ein weiteres Erfassen des Abstands zur longitudinalen Längsparklückenbegrenzung während des Parkvorgangs durchgeführt. Es wird eine aktuell erreichbare Parkposition des Kraftfahrzeugs abhängig von zumindest dem während des Parkvorgangs erfassten Abstands zu der longitudinalen Längsparklückenbegrenzung bestimmt. Die aktuell erreichbare Parkposition wird mit der Soll-Parkposition bei Erreichen einer vorbestimmten Position des Kraftfahrzeugs während des Parkvorgangs verglichen. Der longitudinale Abstandsschwellwert wird, wenn die aktuell erreichbare Parkposition von der Soll-Parkposition abweicht, verringert. Es wird eine neue Einparkteiltrajektorie abhängig von dem lateralen Abstandsschwellwert und dem verringerten longitudinalen Abstandsschwellwert bestimmt. Das Kraftfahrzeug wird dann entlang der neuen Einparkteiltrajektorie bewegt.

Durch das Verringern des longitudinalen Abstandsschwellwerts während des Einparkvorgangs können somit Ungenauigkeiten während des Vermessens der Längsparklücke ausgeglichen werden. Insbesondere kann mit der aktuell erreichbaren Parkposition überprüft werden, ob der laterale Abstand der aktuell erreichbaren Parkposition mit dem lateralen Abstand der Soll-Parkposition übereinstimmt. Die aktuell erreichbare Parkposition entspricht der berechneten Parkposition mit den aktuell erfassten Werten der Ausmaße, insbesondere durch die aktuell erfassten Abstände, der Längsparklücke mit der Erfassungseinrichtung. Insbesondere, sollte die aktuell erreichbare Parkposition von der Soll-Parkposition abweichen, kann entsprechend der longitudinale Abstandsschwellwert verringert werden, sodass das Kraftfahrzeug in einer geparkten Endparkposition dann zumindest den vorbestimmten lateralen Abstand zur lateralen Längsparklückenbegrenzung aufweist. Insbesondere ist vorgesehen, dass die Soll-Parkposition mit der Endparkposition übereinstimmt. Da der laterale Abstand von entscheidender Bedeutung ist und nur schwer zu korrigieren ist, kann durch die Verringerung des longitudinalen Abstandsschwellwerts somit vereinfacht die Soll-Parkposition, insbesondere bezüglich des lateralen Abstands zur Längsparklückenbegrenzung, verbessert eingenommen werden.

Bevorzugt ist, wenn der longitudinale Abstandsschwellwert verringert wird. Dadurch ist es ermöglicht, dass das Kraftfahrzeug während des Parkvorgangs einen geringeren longitudinalen Abstand zur longitudinalen Längsparklückenbegrenzung, zumindest während des Parkvorgangs, einnehmen kann. Beispielsweise kann das Kraftfahrzeug dann näher an die longitudinale Längsparklückenbegrenzung heranfahren, sodass insbesondere durch die veränderte Einparkteiltrajektorie, welche beispielsweise entsprechend der Verringerung des longitudinalen Abstandschwellwerts, beispielsweise verlängert ist, der laterale Abstand der Soll-Parkposition in der Endparkposition eingenommen werden kann.

Insbesondere kann vorgesehen sein, dass die Einparktrajektorie für die Soll-Parkposition abhängig von zumindest den Abstandschwellwerten und abhängig von den Längsparklückenbegrenzungen bestimmt wird. Des Weiteren kann insbesondere vorgesehen sein, dass das Kraftfahrzeug sich entlang der neuen Einparkteiltrajektorie insbesondere mit dem verringerten longitudinalen Abstandsschwellwert bewegt. Bei dem Kraftfahrzeugbauteil, welches insbesondere den longitudinalen Abstand des Kraftfahrzeugs betrifft, kann es sich insbesondere um ein Kraftfahrzeugbauteil an einen Heckbereich des Kraftfahrzeugs handeln, beispielsweise eine Stoßstange oder eine Kofferraumtür des Kraftfahrzeugs. Bei dem Kraftfahrzeugbauteil, welches insbesondere den lateralen Abstand des Kraftfahrzeugs betrifft, kann es sich beispielsweise um zumindest einen seitlichen Reifen des Kraftfahrzeugs oder um einen Kotflügel des Kraftfahrzeugs handeln. Insbesondere können die Abstände der Kraftfahrzeugbauteile durch entsprechende, an diesen Kraftfahrzeugbauteilen verbaute Umgebungssensoren erfasst werden. Es können dann die longitudinalen Abstandsschwellwerte die Abstände zwischen dem Kraftfahrzeugbauteil am Heckbereich und dem Kraftfahrzeugbauteil am Frontbereich und einer jeweiligen longitudinalen Längsparklückenbegrenzung betreffen. Es kann weiterhin der laterale Abstandsschwellwert den Abstand zwischen dem Kraftfahrzeugbauteil am Seitenbereich und der lateralen Längsparklückenbegrenzung betreffen. Insbesondere können die Abstände beispielsweise mittels Ultraschallsensoren, Radarsensoren, Lidarsensoren oder Kamerasensoren erfasst werden. Da beispielsweise Ultraschallsensoren, wenn das Kraftfahrzeug an der Längsparklücke vorbeifährt, insbesondere den lateralen Abstand zu Längsparklückenbegrenzung sehr genau erfassen können, jedoch den longitudinalen Abstand aufgrund der Ausrichtung der Ultraschallsensoren nur schwer erfassen können, kann durch das erfindungsgemäße Verfahren dennoch eine Endparkposition des Kraftfahrzeugs in der Längsparklücke eingenommen werden, welche den vorbestimmten Abstand der Soll-Parkposition des seitlichen Kraftfahrzeugbauteils zur lateralen Längsparklückenbegrenzung einnimmt. Insbesondere kann durch das Verfahren die Endparkposition des Kraftfahrzeugs mit der Soll-Parkposition übereinstimmen.

Gemäß einer vorteilhaften Ausgestaltungsform wird der longitudinale Abstandsschwellwert dann verringert, wenn ein lateraler Abstand der aktuell erreichbaren Parkposition größer ist als der laterale Abstand der Soll-Parkposition. Die fehlerhafte Vermessung des longitudinalen Abstands des Kraftfahrzeugs zur longitudinalen Längsparklückenbegrenzung geht insbesondere mit einem vergrößerten Abstand der lateralen aktuell erreichbaren Parkposition zur lateralen Längsparklückenbegrenzung einher, so dass das Kraftfahrzeug in der Endparkposition nicht den lateralen Abstand der Soll-Parkposition aufweist. Mit anderen Worten, durch die fehlerhafte Vermessung der longitudinalen Ausmaße der Längsparklücke, kann das Kraftfahrzeug im geparkten Zustand einen größeren lateralen Abstand zur lateralen Längsparklückenbegrenzung aufweisen, als mit der Soll-Parkposition bestimmt und gewollt wurde. Insbesondere wenn es sich dann beim Vergleich der aktuell erreichbaren Parkposition mit der Soll-Parkposition herausstellt, dass der laterale Abstand der aktuell erreichbaren Parkposition größer ist als der der Soll-Parkposition, so kann dann der longitudinale Abstandsschwellwert entsprechend verringert werden, sodass in der Endparkposition, zumindest der laterale Abstand in der Endparkposition dem lateralen Abstand der Soll-Parkposition entspricht.

Ebenfalls vorteilhaft ist, wenn die longitudinalen und die lateralen Längsparklückenbegrenzungen während eines Vorbeifahrens des Kraftfahrzeugs an der Längsparklücke erfasst werden. Mit anderen Worten werden die Ausmaße der Längsparklücke bereits vor dem eigentlichen Parkvorgang erfasst. Insbesondere können damit bereits Objekte vor dem eigentlichen Parkvorgang erfasst werden, wodurch ein zuverlässigeres und genaueres Einparken des Kraftfahrzeugs in der Längsparklücke, beispielsweise aufgrund einer verbesserten Auflösung, durchgeführt werden kann. Des Weiteren lässt sich bereits vor dem Einparkvorgang bestimmen, ob die Längsparklücke als für das Parken für das Kraftfahrzeug geeignet ist. Es lassen sich weiter Ungenauigkeiten während des Parkvorgangs, beispielsweise aufgrund der Umgebungssensorungenauigkeiten, bereits vor dem eigentlichen Parkvorgang vermindern, da bereits vor dem Parkvorgang die Längsparklücke beispielsweise bei geringeren Abständen während des Vorbeifahrens vermessen wird, sodass der Einparkvorgang genauer und zuverlässiger durchgeführt werden kann.

Gemäß einer weiteren vorteilhaften Ausgestaltungsform kann das Kraftfahrzeug mit einem ersten Zug rückwärts in die Längsparklücke eingeparkt werden, und das Verfahren insbesondere während des Befahrens des ersten Zugs durchgeführt werden. Insbesondere Kraftfahrzeuge, welche als Personenkraftwagen ausgebildet sind, haben ihre Lenkung an der vorderen Achse des Kraftfahrzeugs. Dadurch ist eine rückwärts gerichtete Einparktrajektorie den benötigten Manövrierraum betreffend geringer als eine nach vorne gerichtete Einparktrajektorie. Insbesondere ist ein geringerer Manövrierraum beim Rückwärtseinparken nötig, als beim Vorwärtseinparken mit dem ersten Zug. Durch das Einparken mit einem ersten Zug rückwärts, kann somit ein Einparken in eine Längsparklücke mit geringeren Ausmaßen, insbesondere in longitudinaler Richtung betrachtet, erfolgen.

Ebenfalls vorteilhaft ist, wenn die vorbestimmte Position erreicht wird, wenn ein Wert des Abstands eines, insbesondere der longitudinalen Längsparklückenbegrenzung zugewandten, Kraftfahrzeugbauteils beim Parkvorgang dem longitudinalen Abstandsschwellwert entspricht. Mit anderen Worten, wenn der Wert des Abstand des Kraftfahrzeugbauteils dem Abstandsschwellwert entspricht, dann wird die aktuell erreichbare Parkposition mit der Soll-Parkposition verglichen und sollte die aktuell erreichbare Parkposition von der Soll-Parkposition abweichen, insbesondere den lateralen Abstand betreffend, so kann der longitudinale Abstandsschwellwert verringert werden, sodass dann insbesondere der laterale Abstand der Soll-Parkposition in der Endparkposition eingenommen werden kann.

Es hat sich weiterhin als vorteilhaft erwiesen, wenn ein zweiter longitudinaler Abstandsschwellwert für eine weitere longitudinale Längsparklückenbegrenzung bestimmt wird, die in Richtung einer Längsrichtung der Längsparklücke der longitudinalen Längsparklückenbegrenzung gegenüberliegt. Mit anderen Worten handelt es sich hierbei um den Abstandsschwellwert, welcher die zweite longitudinale Längsparklückenbegrenzung betrifft. Insbesondere kann die zweite Längsparklückenbegrenzung auch bereits während des Vorbeifahrens an der Längsparklücke mit erfasst werden. Insbesondere kann dadurch bereits vor dem eigentlichen Parkvorgang bestimmt werden ob die Längsparklücke für das Kraftfahrzeug zum Längseinparken geeignet ist. Durch das Bestimmen des zweiten longitudinalen Abstandsschwellwerts, kann auch gegenüber dieser Längsparklückenbegrenzung ein Sicherheitsabstand bestimmt werden, sodass die Möglichkeit einer kritischen Situation zwischen der zweiten longitudinalen Längsparklückenbegrenzung und dem Kraftfahrzeug verringert ist.

Gemäß einer weiteren vorteilhaften Ausgestaltungsform kann nach Erreichen einer zweiten vorbestimmten Position die aktuell erreichbare Parkposition mit der Soll-Parkposition verglichen werden und wenn die aktuell erreichbare Parkposition von der Soll-Parkposition abweicht wird der zweite longitudinale Abstandschwellwert verringert, insbesondere verringert. Insbesondere kann somit auch bei dem zweiten longitudinalen Abstandsschwellwert dieser verringert werden, sodass das Parkassistenzsystem, sollte die aktuell erreichbare Parkposition von der Soll-Parkposition abweichen, den zweiten longitudinalen Abstandsschwellwert verringern kann, sodass das Kraftfahrzeug zumindest den lateralen Abstand betreffend in der Endparkposition den Abstand der Soll-Parkposition einnehmen kann. Dadurch ist es ermöglicht, dass bei beiden longitudinalen Längsparklückenbegrenzungen die longitudinalen Abstandsschwellwerte verringert werden können, um in der Endparkposition den lateralen Abstand der Soll-Parkposition des Kraftfahrzeugs zu erreichen.

Es hat sich weiterhin als vorteilhaft erwiesen, wenn der zweite longitudinale Abstandsschwellwert beim zweiten Zug des Kraftfahrzeugs bei dem Parkvorgang in einer Vorwärtsbewegung des Kraftahrzeugs bestimmt wird, insbesondere wenn der zweite Zug auf den ersten Zug folgt. Insbesondere kann somit das Kraftfahrzeug mit dem ersten Zug in die Längsparklücke rückwärts einparken und kann im Anschluss an den ersten Zug mit dem zweiten Zug nach vorne fahren um in die Soll-Parkposition zu gelangen. Sollte das Kraftfahrzeug auch mit dem zweiten Zug nicht in die gewünschte Soll-Parkposition gelangen, so können insbesondere die entsprechenden Abstandsschwellwerte auch für die zweite longitudinale Längsparklückenbegrenzung verringert werden, sodass das Kraftfahrzeug zuverlässig in die Soll-Parkposition gelangen kann.

Gemäß einer weiteren vorteilhaften Ausgestaltungsform kann eine Längsparklücke als für das Längseinparken für das Kraftfahrzeug geeignet bestimmt werden, wenn das longitudinale Ausmaß der Längsparklücke zumindest der Summe der longitudinalen Ausmaße des Kraftfahrzeugs und des longitudinalen Abstandsschwellwerts und eines weiteren longitudinalen Abstandsschwellwert entspricht. Insbesondere kann der weitere longitudinale Abstandsschwellwert dem zweiten longitudinalen Abstandsschwellwert entsprechen. Insbesondere ist es somit ermöglicht, dass das Verfahren nur dann angewendet wird, wenn die Längsparklücke bereits vor dem Einparkvorgang auch als für das Kraftfahrzeug passend bestimmt wird. Insbesondere sind somit die Sicherheitsabstände, mit anderen Worten die Abstandsschwellwerte, noch nicht reduziert worden. Eine Reduzierung der Abstandsschwellwerte wird erst bei der weiteren Vermessung während der Bewegung entlang der Einparktrajektorie durchgeführt. Insbesondere kann dadurch eine zuverlässige Einparktrajektorie bestimmt werden, ohne dass die entsprechenden Längsparklückenbegrenzungen, welche beispielsweise weitere Kraftfahrzeuge sein können, beeinträchtigt werden.

Es hat sich weiterhin als vorteilhaft erwiesen, wenn ein Bordstein der Längsparklücke als die laterale Längsparklückenbegrenzung erfasst wird. Insbesondere kann dann der laterale Abstand zu Längsparklückenbegrenzung gering gehalten werden, da beispielsweise Kraftfahrzeugtüren auch über die Bordsteinkante geschwenkt werden können und das Kraftfahrzeug insbesondere mit seinem Kraftfahrzeugbauteil sehr nah an den Bordstein herangefahren werden kann. Dadurch ist es ermöglicht, dass das Kraftfahrzeug in Längsparklücken mit geringen lateralen Ausmaßen einparken kann.

Ein weiterer Aspekt der Erfindung betrifft ein Parkassistenzsystem, welches dazu ausgebildet ist ein zuvor genanntes Verfahren oder eine vorteilhafte Ausgestaltungsform davon durchzuführen.

Ein nochmals weiterer Aspekt der Erfindung betrifft ein Kraftfahrzeug mit einem Parkassistenzsystem. Das Kraftfahrzeug ist insbesondere als Personenkraftwagen ausgebildet.

Vorteilhafte Ausgestaltungsformen des Verfahrens sind als vorteilhafte Ausgestaltungsformen des Parkassistenzsystems sowie des Kraftfahrzeugs anzusehen. Das Parkassistenzsystem sowie das Kraftfahrzeug weisen dazu gegenständliche Merkmale auf, welche eine Durchführung des Verfahrens oder eine vorteilhafte Ausgestaltungsform davon ermöglichen.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug mit einem Parkassistenzsystem gemäß einer Ausführungsform der vorliegenden Erfindung in einer ersten Situation eines Parkvorgangs in einem Umgebungsszenario in einer Draufsicht;
- Fig. 2: das Kraftfahrzeug mit dem Parkassistenzsystem gemäß Fig. 1 in einer weiteren Situation des Parkvorgangs in dem Umgebungsszenario in einer Draufsicht; und
- Fig. 3: das Kraftfahrzeug mit dem Parkassistenzsystem gemäß Fig. 1 und Fig. 2 in einer nochmals weiteren Situation des Parkvorgangs in dem Umgebungsszenario in einer Draufsicht.

In den Figuren werden gleiche und funktionsgleiche Elemente mit den gleichen Bezugszeichen versehen.

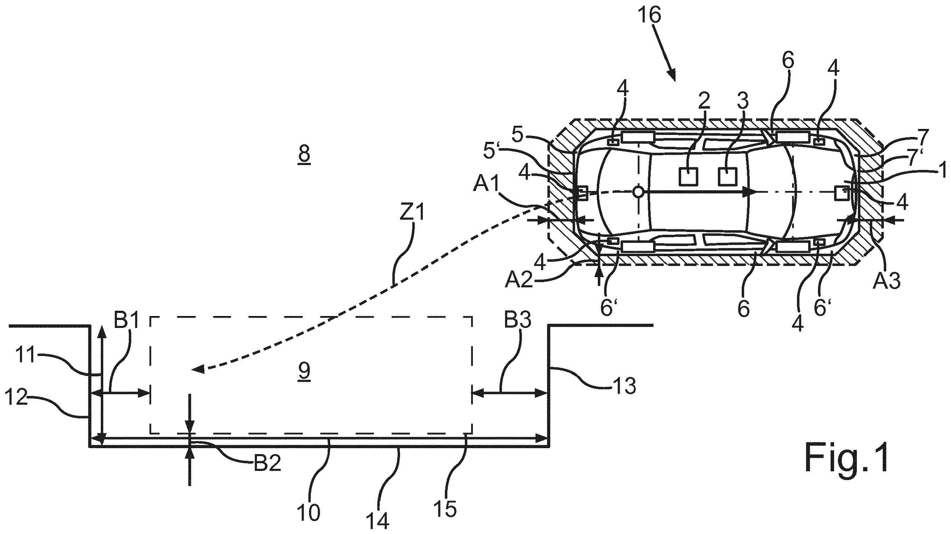

Fig. 1 zeigt ein Kraftfahrzeug 1 gemäß einer Ausführungsform der folgenden Erfindung in einer ersten Situation während eines Parkvorgangs in einer Draufsicht. Das Kraftfahrzeug 1 ist im vorliegenden Fall als Personenkraftwagen ausgebildet. Das Kraftfahrzeug 1 weist ein Parkassistenzsystem 2 auf. Das Parkassistenzsystem 2 kann beispielsweise eine Steuerungseinrichtung aufweisen, welche Informationen für das Parkassistenzsystem 2 auswerten kann. Das Kraftahrzeug 1 weist ferner eine Erfassungseinrichtung 3 auf, welche beispielsweise Umgebungsinformationen von Umgebungssensoren 4 erfassen kann.

Die am Kraftfahrzeug 1 angeordneten Umgebungssensoren 4 sind insbesondere dazu ausgebildet, eine Umgebung 8 des Kraftfahrzeugs 1 zu erfassen. Bei den Umgebungssensoren 4 kann es sich beispielsweise um Radarsensoren und/oder Ultraschallsensoren und/oder Lidarsensoren und/oder Kamerasensoren handeln. Die Umgebungssensoren 4 können bauartgleich ausgebildet sein. Vorliegend weist Kraftfahrzeug 1 insbesondere sechs Umgebungssensoren 4 auf. Es kann vorgesehen sein, dass beispielsweise ein Umgebungssensor 4 an einem Heckbereich 5 insbesondere an einem Kraftfahrzeugbauteil 5' am Heckbereich 5 ausgebildet ist. Beispielsweise kann ein weiterer Umgebungssensor 4 in einem Frontbereich 7 des Kraftfahrzeugs 1 an einem Kraftfahrzeugbauteil 7' des Frontbereichs 7 angeordnet sein. Beispielsweise können jeweils zwei Umgebungssensoren 4 an einem Seitenbereich 6 des Kraftfahrzeugs 1 angeordnet sein. Insbesondere können die Umgebungssensoren 4, welche am Seitenbereich 6 angeordnet sind, an einem Kraftfahrzeugbauteil 6' des Seitenbereich 6 angeordnet sein. Ebenfalls möglich ist, dass weniger als sechs Umgebungssensoren 4 oder auch mehr als sechs Umgebungssensoren 4 am Kraftfahrzeug 1 angeordnet sind. Das Kraftfahrzeugbauteil 5' kann beispielsweise als eine Heckstoßstange oder eine Kofferraumtür ausgebildet sein. Das Kraftfahrzeugbauteil 6' kann beispielsweise als ein Reifen oder ein Kotflügel des Kraftfahrzeugs 1 ausgebildet sein. Das Kraftfahrzeugbauteil 7' kann beispielsweise als eine Frontstoßstange oder eine Motorhaube ausgebildet sein. Die vorliegende Anordnung der Umgebungssensoren 4 und deren jeweilige Ausgestaltung sind rein beispielhaft zu sehen und keinesfalls als abschließend zu betrachten.

Das Parkassistenzsystem 2 dient insbesondere zum Unterstützen eines Fahrers des Kraftfahrzeugs 1 beim Führen des Kraftfahrzeugs 1. Insbesondere dient das Parkassistenzsystem 2 beim Unterstützen eines Parkvorgangs des Kraftfahrzeugs 1.

Mit den Umgebungssensoren 4 und der Erfassungseinrichtung 3 kann eine Längsparklücke 9 erfasst werden. Die Längsparklücke 9 weist insbesondere ein longitudinales Ausmaß 10 und eine laterales Ausmaß 11 auf. Insbesondere weist die Längsparklücke 9 zumindest eine erste longitudinale Längsparklückenbegrenzung 12 auf. Vorliegend weist die Längsparklücke 9 die erste longitudinale Längsparklückenbegrenzung 12 und eine zweite longitudinale Längsparklückenbegrenzung 13 auf. Des Weiteren weist die Längsparklücke 9 eine laterale Längsparklückenbegrenzung 14 auf. Beispielsweise können die longitudinalen Längsparklückenbegrenzungen 12, 13 durch weitere Kraftfahrzeuge, welche geparkt sind, vorgegeben sein. Insbesondere kann vorgesehen sein, dass die laterale Längsparklückenbegrenzung 14 durch einen Bordstein der Längsparklücke 9 vorgegeben ist.

Insbesondere ist vorgesehen, dass die longitudinalen und lateralen Längsparklückenbegrenzungen 12, 13, 14 während eines Vorbeifahrens des Kraftfahrzeugs 1 an der Längsparklücke 9 erfasst werden. Mittels der Erfassungseinrichtung 3, insbesondere mittels der Umgebungssensoren 4, kann die laterale Längsparklückenbegrenzung 14 sehr genau bestimmt werden. Durch die Anordnung der Umgebungssensoren 4 an dem Kraftfahrzeug 1 ist eine Bestimmung der longitudinalen Längsparklückenbegrenzungen 12, 13 mit Ungenauigkeiten behaftet.

Die Längsparklücke 9 kann beim Vorbeifahren des Kraftfahrzeugs 1 als für das Längseinparken für das Kraftfahrzeug 1 geeignet bestimmt werden, wenn die longitudinalen Ausmaße 10 der Längsparklücke 9 zumindest der Summe der longitudinalen Ausmaße des Kraftfahrzeugs 1 und eines ersten longitudinalen Abstandsschwellwerts A1 und eines weiteren longitudinalen, insbesondere zweiten, Abstandsschwellwerts A3 entsprechen.

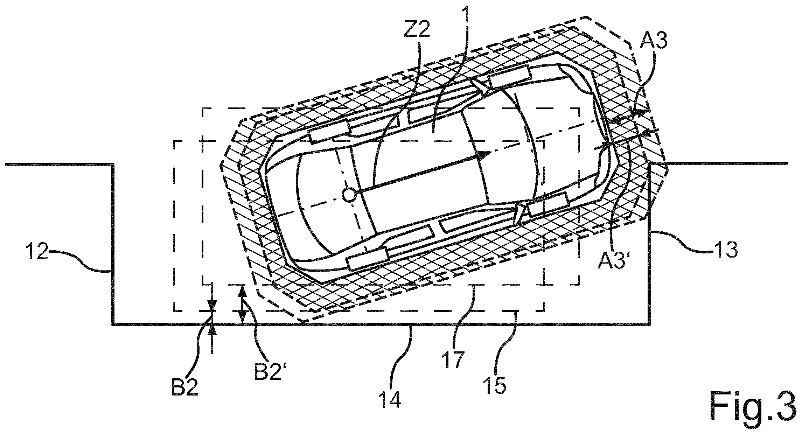

Es kann weiterhin vorgesehen sein, dass das Kraftfahrzeug 1 mit einem ersten Zug Z1, als Teil einer Einparktrajektorie Z1, Z2 (Fig. 3) rückwärts in die Längsparklücke 9 eingeparkt wird. Insbesondere kann dieses Einparken zumindest semi-autonom erfolgen. Es ist ebenfalls möglich, dass das Kraftfahrzeug 1 vollautonom in die Längsparklücke 9 eingeparkt wird.

Es ist vorgesehen, dass nach dem Vermessen der Längsparklücke 9 eine Soll-Parkposition 15 in der Längsparklücke 9 bestimmt wird. Die Soll-Parkposition 15 weist einen ersten longitudinalen Abstand B1 zur ersten longitudinalen Längsparklückenbegrenzung 12 auf. Ferner weist die Soll-Parkposition 15 einen lateralen Abstand B2 zur lateralen Längsparklückenbegrenzung 14 auf. Ferner weist die Soll-Parkposition 15 einen zweiten longitudinalen Abstand B3 zur zweiten longitudinalen Längsparklückenbegrenzung 13 auf. Insbesondere sind die Abstände B1, B2, B3 derart bestimmt, dass die Abstände zwischen den Kraftfahrzeugbauteilen 5', 6', 7' und den Längsparklückenbegrenzungen 12, 13, 14 bestimmt sind. Insbesondere weist dann das Kraftfahrzeugbauteil 5' den longitudinalen Abstand B1 zur ersten longitudinalen Längsparklückenbegrenzung 12 auf. Insbesondere weist dann das Kraftfahrzeugbauteil 6' den lateralen Abstand B2 zur lateralen Längsparklückenbegrenzung 14 auf. Insbesondere weist dann das Kraftfahrzeugbauteil 7' den zweiten longitudinalen Abstand B3 zur zweiten longitudinalen Längsparklückenbegrenzung 13 auf.

Des Weiteren ist die Soll-Parkposition 15 abhängig von einem ersten longitudinalen Abstandsschwellwert A1, einem zweiten longitudinalen Abstandsschwellwert A3 und einem lateralen Abstandsschwellwert A2. Insbesondere ist der erste longitudinale Abstandsschwellwert A1 dem Kraftfahrzeugbauteil 5' zugeordnet, während der zweite longitudinale Abstandsschwellwert A3 dem Kraftfahrzeugbauteil 7' zugeordnet ist. Der laterale Abstandsschwellwert A2 ist wiederum dem Kraftfahrzeugbauteil 6' zugeordnet.

Nachdem die Soll-Parkposition 15 bestimmt ist, wird entsprechend von einer Startposition 16 des Kraftfahrzeugs 1 aus eine Einparktrajektorie Z1, Z2 für die Soll-Parkposition 15 bestimmt. Insbesondere ist die Einparktrajektorie Z1, Z2 zumindest abhängig von den Abstandschwellwerten A1, A2, A3 und insbesondere abhängig von den Längsparklückenbegrenzungen 12, 13, 14.

Nachdem die Einparktrajektorie Z1, Z2 bestimmt ist, bewegt sich das Kraftfahrzeug 1 insbesondere semi-autonom entlang der Einparktrajektorie Z1, Z2. Während der Bewegung entlang der Einparktrajektorien Z1, Z2 wird der aktuelle Abstand, vorliegend vom Kraftfahrzeugbauteil 5' zur ersten longitudinalen Längsparklückenbegrenzung 12, fortwährend erfasst.

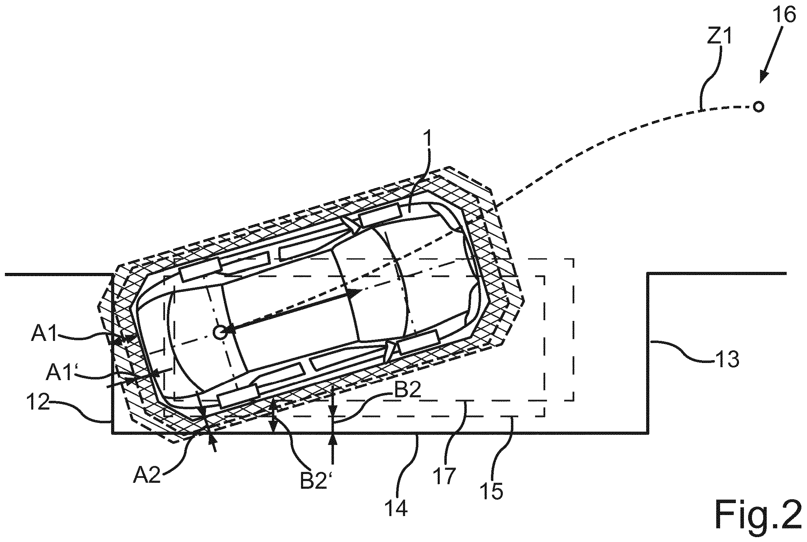

Fig. 2 zeigt das Kraftfahrzeug 1 aus Fig. 1 in einer weiteren Situation des Parkvorgangs. Das Kraftfahrzeug 1 ist vorliegend entlang der Einparktrajektorie Z1, Z2 mit dem ersten Zug Z1 in die Längsparklücke 9 rückwärts eingefahren. Aufgrund von Ungenauigkeiten betreffend zumindest die longitudinale Längsparklückenbegrenzung 12, 13 hat das Parkassistenzsystem 2 ermittelt, dass eine aktuell erreichbare Parkposition 17, welche abhängig von einer aktuellen Erfassung der Abstände des Kraftfahrzeugs 1 zu den Längsparklückenbegrenzungen 12, 13, 14 bestimmt wird, nicht mit der Soll-Parkposition 15 übereinstimmt, mit anderen Worten von der Soll-Parkposition 15 abweicht.

Insbesondere wird die aktuell erreichbare Parkposition 17 abhängig von zumindest dem erfassten aktuellen Abstand zu der longitudinalen Längsparklückenbegrenzung 12, 13, vorliegend insbesondere zur ersten longitudinalen Längsparklückenbegrenzung 12, bestimmt. Bei Erreichen einer vorbestimmten Position des Kraftfahrzeugs 1 während des Parkvorgangs wird ein Vergleich der aktuell erreichbaren Parkposition 17 mit der Soll-Parkposition 15 durchgeführt. Insbesondere ist die vorbestimmte Position dann erreicht, wenn ein aktueller Wert des Abstands des Kraftfahrzeugbauteils 5' beim Parkvorgang dem longitudinalen Abstandsschwellwert A1 entspricht. Insbesondere wird dann eine neue Einparkteiltrajektorie abhängig von dem lateralen Abstandsschwellwert A2 und einem verringerten longitudinalen Abstandsschwellwert A1' durchgeführt. Insbesondere wird der verringerte longitudinale Abstandsschwellwert A1' herangezogen, wenn die aktuell erreichbare Parkposition 17 von der Soll-Parkposition 15 abweicht. Insbesondere wenn der laterale Abstand B2' der aktuell erreichbaren Parkposition 17 größer ist als der laterale Abstand B2 der Soll-Parkposition 15 wird dann die Einparkteiltrajektorie abhängig von dem verringerte longitudinalen Abstandsschwellwert A1' bestimmt. Es wird dann der longitudinale Abstandsschwellwert A1 verringert, sodass der verringerte longitudinale Abstandsschwellwert A1' benutzt wird, und mit dem verringerten longitudinalen Abstandsschwellwert A1' die neue Einparkteiltrajektorie bestimmt wird.

Es wird dann das Kraftfahrzeug 1 entlang der neuen Einparkteiltrajektorie bewegt, sodass das Kraftfahrzeug 1 zumindest mit dem Kraftfahrzeugbauteil 6' den lateralen Abstand B2 in einer Endparkposition des Kraftfahrzeugs 1 im geparkten Zustand einnehmen kann. Mit anderen Worten wenn der laterale Abstand B2' der aktuell erreichbaren Parkposition 17 in der Endparkposition mit dem lateralen Abstand B2 der Soll-Parkposition 15 übereinstimmt. Insbesondere kann vorgesehen sein, dass auch aktuell erfasste longitudinale Abstände in der aktuell erreichbaren Parkposition 17 mit den longitudinalen Abständen B1, B3 übereinstimmen, so dass die Endparkposition mit der Soll-Parkposition 15 übereinstimmt.

Fig. 3 zeigt das Kraftfahrzeug 1 in einer weiteren Situation während des Parkvorgangs. Insbesondere zeigt Fig. 3 das Kraftfahrzeug 1 aus Fig. 2, wobei der erste Zug Z1 in die Längsparklücke 9 bereits durchgeführt wurde. Insbesondere zeigt Fig. 3, dass das Kraftfahrzeug 1 entlang eines zweiten Zugs Z2 während einer Vorwärtsbewegung des Kraftfahrzeugs 1 innerhalb der Parklücke 9 bewegt werden kann. Insbesondere wird dann der zweite longitudinale Abstandsschwellwert A3 für die zweite longitudinale Längsparklückenbegrenzung 13 bestimmt, welche insbesondere in Richtung einer Längsrichtung der Längsparklücke 9 betrachtet der ersten longitudinalen Längsparklückenbegrenzung 12 gegenüberliegt. Insbesondere kann dann nach Erreichen einer zweiten vorbestimmten Position wiederum die aktuell erreichbare Parkposition 17 mit der Soll-Parkposition 15 verglichen werden und wenn die aktuell erreichbare Parkposition 17 von der Soll-Parkposition 15 abweicht wird der zweite longitudinale Abstandsschwellwert A3 insbesondere zum zweiten verringerten longitudinalen Abstandsschwellwert A3' verringert, insbesondere verringert, so dass das Kraftfahrzeug 1, insbesondere das Kraftfahrzeugbauteil 6', in der Endparkposition zumindest den lateralen Abstand B2 zur lateralen Längsparklückenbegrenzung 14 einnehmen kann.

Insbesondere wird der zweite longitudinale Abstandsschwellwert A3, bei dem zweiten Zug Z2 des Kraftahrzeugs 1 bei dem Parkvorgang in der Vorwärtsbewegung des Kraftahrzeugs 1 bestimmt. Insbesondere ist der zweite Zug Z2 folgend auf den ersten Zug Z1.

Insbesondere kann durch das vorgestellte Verfahren, das Kraftfahrzeug 1 in die Längsparklücke 9 einparken und in die Endparkposition manövriert werden, welche der Soll-Parkposition 15 entspricht. Es ist vorgesehen, dass zumindest der Abstand B2 der Soll-Parkposition 15 in der Endparkposition eingehalten wird.

## Patentansprüche

1. Verfahren zum Längseinparken eines Kraftfahrzeugs (1) bei einem zumindest semi-autonomen Parkvorgang in eine Längsparklücke (9), wobei zumindest eine longitudinale Längsparklückenbegrenzung (12) und eine laterale Längsparklückenbegrenzung (13, 14) der Längsparklücke (9) mittels einer Erfassungseinrichtung (3) des Kraftfahrzeugs (1) erfasst werden, umfassend die Schritte:
a) Bestimmen einer Soll-Parkposition (15) in der Längsparklücke (9) mit einem longitudinalen Abstand (B1) eines Kraftfahrzeugbauteils (5') des Kraftfahrzeugs (1) zu der longitudinalen Längsparklückenbegrenzung (12) und mit einem lateralen Abstand (B2) eines Kraftfahrzeugbauteils (6') des Kraftfahrzeugs (1) zu der lateralen Längsparklückenbegrenzung (14) abhängig von den erfassten Längsparklückenbegrenzungen (12, 13, 14) und abhängig von einem longitudinalen Abstandsschwellwert (A1) und einem lateralen Abstandsschwellwert (A2);
b) Bestimmen einer Einparktrajektorie (Z1, Z2) für die Soll-Parkposition (15) abhängig von zumindest den Abstandschwellwerten (A1, A2);
c) Bewegen des Kraftfahrzeugs (1) entlang der Einparktrajektorie (Z1, Z2) und weiteres Erfassen des Abstands zumindest zu der longitudinalen Längsparklückenbegrenzung (12) während des Parkvorgangs;
d) Bestimmten einer aktuell erreichbaren Parkposition (17) des Kraftfahrzeugs (1) abhängig von zumindest dem während des Parkvorgangs erfassten Abstands zu der longitudinalen Längsparklückenbegrenzung (12);
**gekennzeichnet durch** die Schritte:
e) Vergleich der aktuell erreichbaren Parkposition (17) mit der Soll-Parkposition (15) bei Erreichen einer vorbestimmten Position des Kraftfahrzeugs (1) während des Parkvorgangs;
f) Verringern des longitudinalen Abstandsschwellwerts (A1), wenn die aktuell erreichbare Parkposition (17) von der Soll-Parkposition (15) abweicht;
g) Bestimmen einer neuen Einparkteiltrajektorie abhängig von dem lateralen Abstandsschwellwert (A2) und dem verringerten longitudinalen Abstandsschwellwert (A1'); und
h) Bewegen des Kraftfahrzeugs (1) entlang der neuen Einparkteiltrajektorie.

2. Verfahren nach Anspruch 1,
**dadurch gekennzeichnet, dass**
in Schritt f) der longitudinale Abstandsschwellwert (A1) dann verringert wird, wenn ein lateraler Abstand (B2') der aktuell erreichbaren Parkposition (17) größer ist als der laterale Abstand (B2) der Soll-Parkposition (15).

3. Verfahren nach einem der vorhergehenden Ansprüchen,
**dadurch gekennzeichnet, dass**
die longitudinalen und lateralen Längsparklückenbegrenzungen (12, 13, 14) während eines Vorbeifahrens des Kraftfahrzeugs (1) an der Längsparklücke (9) erfasst werden.

4. Verfahren nach einem der vorhergehenden Ansprüchen,
**dadurch gekennzeichnet, dass**
das Kraftfahrzeug (1) mit einem ersten Zug (Z1) rückwärts in die Längsparklücke (9) eingeparkt wird, und die Schritte a) bis h) während des Befahrens des ersten Zugs (Z1) durchgeführt werden.

5. Verfahren nach einem der vorhergehenden Ansprüchen,
**dadurch gekennzeichnet, dass**
die vorbestimmte Position in Schritt e) erreicht wird, wenn ein Wert des Abstands eines Kraftfahrzeugbauteils (5') beim Parkvorgang dem longitudinalen Abstandsschwellwert (A1) entspricht.

6. Verfahren nach einem der vorhergehenden Ansprüchen,
**dadurch gekennzeichnet, dass**
ein zweiter longitudinaler Abstandsschwellwert (A3) für eine weitere longitudinale Längsparklückenbegrenzung (13) bestimmt wird, die in Richtung einer Längsrichtung der Längsparklücke (9) der longitudinalen Längsparklückenbegrenzung (12) gegenüberliegt.

7. Verfahren nach Anspruch 6,
**dadurch gekennzeichnet, dass**
nach Erreichen einer zweiten vorbestimmten Position die aktuell erreichbare Parkposition (17) mit der Soll-Parkposition (15) verglichen wird und wenn die aktuell erreichbare Parkposition (17) von der Soll-Parkposition (15) abweicht wird der zweite longitudinale Abstandschwellwert (A3) verringert.

8. Verfahren nach Anspruch 6 oder 7,
**dadurch gekennzeichnet, dass**
der zweite longitudinale Abstandsschwellwert (A3) bei einem zweiten Zug (Z2) des Kraftfahrzeugs (1) bei dem Parkvorgang in einer Vorwärtsbewegung des Kraftfahrzeugs (1) bestimmt wird.

9. Verfahren nach einem der vorhergehenden Ansprüche,
**dadurch gekennzeichnet, dass**
eine Längsparklücke (9) als für das Längseinparken für das Kraftfahrzeug (1) geeignet bestimmt wird, wenn das longitudinale Ausmaß der Längsparklücke (9) zumindest der Summe der longitudinalen Ausmaße des Kraftfahrzeugs (1) und des longitudinalen Abstandsschwellwerts (A1) und eines weiteren longitudinalen Abstandsschwellwerts (A3) entspricht.

10. Verfahren nach einem der vorhergehenden Ansprüche,
**dadurch gekennzeichnet, dass**
ein Bordstein der Längsparklücke (9) als die laterale Längsparklückenbegrenzung (14) erfasst wird.

11. Parkassistenzsystem (2), welches dazu ausgebildet ist ein Verfahren nach einem der Ansprüche 1 bis 10 durchzuführen.

12. Kraftfahrzeug (1) mit einem Parkassistenzsystem (2) nach Anspruch 11.

## Claims

1. Method for longitudinally parking a motor vehicle (1) in at least semi-autonomous parking process into a longitudinal parking space (9), wherein at least one longitudinal boundary (12) of the longitudinal parking space and one lateral boundary (13, 14) of the longitudinal parking space of the longitudinal parking space (9) are sensed by means of a sensing device (3) of the motor vehicle (1), comprising the steps:
a) determining a setpoint parking position (15) in the longitudinal parking space (9) with a longitudinal distance (B1) between a motor vehicle component (5') of the motor vehicle (1) and the longitudinal boundary (12) of the longitudinal parking space and with a lateral distance (B2) between a motor vehicle component (6') of the motor vehicle (1) and the lateral boundary (14) of the longitudinal parking space as a function of the sensed longitudinal parking space boundaries (12, 13, 14) and as a function of a longitudinal distance threshold value (A1) and a lateral distance threshold value (A2);
b) determining a parking trajectory (Z1, Z2) for the setpoint parking position (15) as a function of at least the distance threshold values (A1, A2);
c) moving the motor vehicle (1) along the parking trajectory (Z1, Z2) and further sensing of the distance at least from the longitudinal boundary (12) of the longitudinal parking space during the parking process;
d) determining a currently reachable parking position (17) of the motor vehicle (1) as a function of at least the distance, sensed during the parking process, from the longitudinal boundary (12) of the longitudinal parking space;
**characterized by** the steps:
e) comparison of the currently reachable parking position (17) with the setpoint parking position (15) when a predetermined position of the motor vehicle (1) is reached during the parking process;
f) reducing the longitudinal distance threshold value (A1) if the currently reachable parking position (17) differs from the setpoint parking position (15);
g) determining a new parking partial trajectory as a function of the lateral distance threshold value (A2) and the reduced longitudinal distance threshold value (A1'); and
h) moving the motor vehicle (1) along the new parking partial trajectory.

2. Method according to Claim 1,
**characterized in that**
in step f) the longitudinal distance threshold value (A1) is then reduced if a lateral distance (B2') of the currently reachable parking position (17) is larger than the lateral distance (B2) of the setpoint parking position (15).

3. Method according to one of the preceding claims,
**characterized in that**
the longitudinal and lateral boundaries (12, 13, 14) of the longitudinal parking space are sensed while the motor vehicle (1) drives past the longitudinal parking space (9).

4. Method according to one of the preceding claims,
**characterized in that**
the motor vehicle (1) is parked with a first movement (Z1) rearward into the longitudinal parking space (9), and the steps (A) to (H) are carried out while the first movement (Z1) is being executed.

5. Method according to one of the preceding claims,
**characterized in that**
the predetermined position in step (E) is reached if a value of the distance of a motor vehicle component (5') corresponds to the longitudinal distance threshold value (A1) during the parking process.

6. Method according to one of the preceding claims,
**characterized in that**
a second longitudinal distance threshold value (A3) is determined for a further longitudinal boundary (13) of the longitudinal parking space, which boundary (13) lies opposite the longitudinal boundary (12) of the longitudinal parking space in the direction of a longitudinal direction of the longitudinal parking space (9).

7. Method according to Claim 6,
**characterized in that**
after a second predetermined position is reached, the currently reachable parking position (17) is compared with the setpoint parking position (15), and if the currently reachable parking position (17) differs from the setpoint parking position (15) the second longitudinal distance threshold value (A3) is reduced.

8. Method according to Claim 6 or 7,
**characterized in that**
the second longitudinal distance threshold value (A3) is determined during a second movement (Z2) of the motor vehicle (1) during the parking process during forward motion of the motor vehicle (1).

9. Method according to one of the preceding claims,
**characterized in that**
a longitudinal parking space (9) is determined as suitable for longitudinal parking for the motor vehicle (1) if the longitudinal dimension of the longitudinal parking space (9) corresponds at least to the sum of the longitudinal dimensions of the motor vehicle (1) and of the longitudinal distance threshold value (A1) and of a further longitudinal distance threshold value (A3).

10. Method according to one of the preceding claims,
**characterized in that**
a kerb stone of the longitudinal parking space (9) is sensed as the lateral boundary (14) of the longitudinal parking space.

11. Parking assistance system (2) which is designed to carry out a method according to one of Claims 1 to 10.

12. Motor vehicle (1) having a parking assistance system (2) according to Claim 11.

## Revendications

1. Procédé de stationnement en créneau d'un véhicule automobile (1) lors d'un processus de stationnement au moins semi-autonome à une place de stationnement en créneau (9), au moins une délimitation longitudinale (12) et une délimitation latérale (13, 14) de la place de stationnement en créneau (9) étant détectées à l'aide d'un dispositif de détection (3) du véhicule automobile (1), le procédé comprenant les étapes suivantes :
a) déterminer une position de stationnement cible (15) dans la place de stationnement en créneau (9) à une distance longitudinale (B1) d'un composant (5') du véhicule automobile (1) par rapport à la délimitation longitudinale de place de stationnement en créneau (12) et à une distance latérale (B2) d'un composant (6') du véhicule automobile (1) par rapport à la délimitation latérale (14) de la place de stationnement en créneau en fonction de délimitations détectées (12, 13, 14) de la place de stationnement en créneau et en fonction d'une valeur de seuil de distance longitudinale (A1) et d'une valeur de seuil de distance latérale (A2) ;
b) déterminer une trajectoire de stationnement en créneau (Z1, Z2) pour la position de stationnement cible (15) en fonction d'au moins les valeurs de seuil de distance (A1, A2) ;
c) déplacer le véhicule automobile (1) le long de la trajectoire de stationnement en créneau (Z1, Z2) et détecter en outre la distance au moins par rapport à la délimitation longitudinale (12) de la place de stationnement en créneau lors du processus de stationnement ;
d) déterminer une position de stationnement actuellement atteignable (17) du véhicule automobile (1) en fonction d'au moins la distance par rapport à la délimitation longitudinale détectée (12) de la place de stationnement en créneau lors du processus de stationnement ;
**caractérisé par** les étapes suivantes :
e) comparer la position de stationnement actuellement atteignable (17) à la position de stationnement cible (15) lorsque le véhicule automobile (1) atteint une position prédéterminée lors du processus de stationnement ;
f) réduire la valeur de seuil de distance longitudinale (A1) si la position de stationnement actuellement atteignable (17) s'écarte de la position de stationnement cible (15) ;
g) déterminer une nouvelle trajectoire de stationnement en créneau partielle en fonction de la valeur de seuil de distance latérale (A2) et de la valeur de seuil de distance longitudinale réduite (A1') ; et
h) déplacer le véhicule automobile (1) le long de la nouvelle trajectoire de stationnement en créneau partielle.

2. Procédé selon la revendication 1,
**caractérisé en ce que**
à l'étape f) la valeur de seuil de distance longitudinale (A1) est alors réduite lorsqu'une distance latérale (B2') de la position de stationnement actuellement atteignable (17) est supérieure à la distance latérale (B2) de la position de stationnement cible (15).

3. Procédé selon l'une des revendications précédentes,
**caractérisé en ce que**
les délimitations longitudinale et latérale (12, 13, 14) de la place de stationnement en créneau sont détectées pendant que le véhicule automobile (1) passe devant la place de stationnement en créneau (9).

4. Procédé selon l'une des revendications précédentes,
**caractérisé en ce que**
le véhicule automobile (1) est stationné lors d'une première marche (Z1) en reculant à la place de stationnement en créneau (9), et les étapes a) à h) sont réalisées lors de la première marche (Z1).

5. Procédé selon l'une des revendications précédentes,
**caractérisé en ce que**
la position prédéterminée à l'étape e) est atteinte lorsqu'une valeur de la distance d'un composant (5') du véhicule automobile correspond à la valeur de seuil de distance longitudinale (A1) lors du processus de stationnement.

6. Procédé selon l'une des revendications précédentes,
**caractérisé en ce que**
une deuxième valeur de seuil de distance longitudinale (A3) est déterminée pour une autre délimitation longitudinale (13) de la place de stationnement en créneau qui se trouve à l'opposé de la délimitation longitudinale (12) de la place de stationnement en créneau par référence à une direction longitudinale de la place de stationnement en créneau (9).

7. Procédé selon la revendication 6,
**caractérisé en ce que**
après avoir atteint une deuxième position prédéterminée, la position de stationnement actuellement atteignable (17) est comparée à la position de stationnement cible (15) et, lorsque la position de stationnement actuellement atteignable (17) s'écarte de la position de stationnement cible (15), la deuxième valeur de seuil de distance longitudinale (A3) est réduite.

8. Procédé selon la revendication 6 ou 7,
**caractérisé en ce que**
la deuxième valeur de seuil de distance longitudinale (A3) est déterminée lors d'une deuxième marche (Z2) du véhicule automobile (1) lors du processus de stationnement dans un mouvement vers l'avant du véhicule automobile (1).

9. Procédé selon l'une des revendications précédentes,
**caractérisé en ce que**
une place de stationnement en créneau (9) est déterminée comme appropriée pour le stationnement en créneau du véhicule automobile (1) lorsque la dimension longitudinale de la place de stationnement en créneau (9) correspond au moins la somme des dimensions longitudinales du véhicule automobile (1) et de la valeur de seuil de distance longitudinale (A1) et d'un autre seuil de distance longitudinale (A3).

10. Procédé selon l'une des revendications précédentes,
**caractérisé en ce que**
une bordure de trottoir de la place de stationnement en créneau (9) est détectée comme délimitation latérale (14) de la place de stationnement en créneau.

11. Système d'aide au stationnement (2), lequel est conçu pour mettre en œuvre un procédé selon l'une des revendications 1 à 10.

12. Véhicule automobile (1) comprenant un système d'aide au stationnement (2) selon la revendication 11.
